# EUROPÄISCHE PATENTSCHRIFT

(11) **EP 3 741 633 B1**
(45) Veröffentlichungstag und Bekanntmachung des Hinweises auf die Patenterteilung: **20.10.2021**
(21) Anmeldenummer: 20173199.9
(22) Anmeldetag: 06.05.2020
(51) Int. Cl.: B60T 1/10, B60T 13/58, B60L 7/26

(54) **VERFAHREN ZUM ÜBERGANG VON EINEM ERSTEN BREMSZUSTAND ZU EINEM ZWEITEN BREMSZUSTAND BEI EINEM FAHRZEUG MIT EINEM ELEKTRISCHEN ANTRIEB**
METHOD FOR TRANSITION FROM A FIRST BRAKING STATE TO A SECOND BRAKING STATE IN A VEHICLE WITH AN ELECTRIC DRIVE
PROCÉDÉ DE TRANSITION D'UN PREMIER ÉTAT DE FREINAGE À UN SECOND ÉTAT DE FREINAGE DANS UN VÉHICULE À ENTRAÎNEMENT ÉLECTRIQUE

(30) Priorität: 22.05.2019 DE 102019207487
(43) Veröffentlichungstag der Anmeldung: 25.11.2020
(73) Patentinhaber: Volkswagen Aktiengesellschaft, 38440 Wolfsburg (DE)
(72) Erfinder: Borchers, Frank, 38536 Meinersen (DE); Busse, Oliver, 38442 Wolfsburg (DE); Kaczor, Benjamin, 38527 Meine (DE)

(56) Entgegenhaltungen:
- DE-A1-102006 034 936
- DE-A1-102010 036 685
- DE-A1-102015 210 297

## Beschreibung

Die vorliegende Erfindung betrifft ein Verfahren zum Übergang von einem ersten Bremszustand zu einem zweiten Bremszustand bei einem Fahrzeug mit einem elektrischen Antrieb. Ferner bezieht sich die Erfindung auf eine Vorrichtung gemäß dem Oberbegriff des Anspruchs 10.

Es ist aus dem Stand der Technik bekannt, dass Fahrzeugassistenz-Systeme genutzt werden können, um das Steuern des Fahrzeuges zu erleichtern. Ein solches System ist bspw. eine Abstandsregelung, bei welcher der Abstand zum vorausfahrenden Fahrzeug gehalten wird. Hierzu ist es notwendig, dass das Fahrzeug automatisiert beschleunigt und verzögert (abgebremst) wird. Beim Verzögern des Fahrzeuges kann die kinetische Energie durch einen generatorischen Betrieb (Rekuperation) des elektrischen Antriebs zurückgewonnen und in einen Speicher für einen späteren Fahrbetrieb zwischengespeichert werden.

In einem ersten Bremszustand kann das aktivierte Fahrzeugassistenz-System die Verzögerung des Fahrzeugs bestimmen. Dieser Zustand kann jeder Zeit durch den Fahrer überstimmt oder auch beendet werden. Durch Betätigung des Bremspedals bestimmt der Fahrer in erster Linie die Verzögerung des Fahrzeugs in einem zweiten Bremszustand. Die zuvor anliegende Verzögerung aus dem ersten Bremszustand muss in geeigneter Form hierzu überführt werden. Bei der Überführung darf der Fahrer nicht irritiert und/oder das manuelle Bremsen erschwert werden.

Denkbar ist daher eine zeitgesteuerte Überführung vom ersten in den zweiten Bremszustand (z. B. im Sinne eines Herausrampen des Generatormoments über eine zeitliche Rampe). Dies hat jedoch den weiteren Nachteil, dass der Fahrer zum Erhalt der Verzögerung des Fahrzeuges auf dem Bremspedal das sich abbauende Verzögerungsmoment aus der Fahrzeugassistenz-System-Bremsung nachtreten muss.

DE 10 2015 210 297 A1 offenbart ein Verfahren zum Steuern eines elektromechanischen Bremskraftverstärkers eines Kraftfahrzeugs bei dem ein Übergang von einem Rekuperationsbremsen hin zu einem rein hydraulischen Bremsen gesteuert wird.

Es ist daher eine Aufgabe der vorliegenden Erfindung, die voranstehend beschriebenen Nachteile zumindest teilweise zu beheben. Insbesondere ist es Aufgabe der vorliegenden Erfindung, einen verbesserten Übergang von einem ersten Bremszustand zu einem zweiten Bremszustand zu ermöglichen.

Die voranstehende Aufgabe wird durch ein Verfahren mit den Merkmalen des Anspruchs 1 und durch eine Vorrichtung mit den Merkmalen des Anspruchs 10 gelöst. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zum Übergang von einem ersten Bremszustand zu einem zweiten Bremszustand bei einem Fahrzeug mit einem elektrischen Antrieb, insbesondere einer elektrischen Maschine.

Hierbei ist insbesondere vorgesehen, dass die nachfolgenden Schritte durchgeführt werden, vorzugsweise nacheinander in der angegebenen Reihenfolge, wobei einzelne der Schritte ggf. auch wiederholt durchgeführt werden können:
- Initiieren des Übergangs bei einer (insbesondere initialen) Betätigung eines Bremspedals des Fahrzeuges, insbesondere durch den Fahrer, wobei im ersten Bremszustand durch eine (insbesondere erste) Bremsfunktion des elektrischen Antriebs (elektrische Maschine) eine Bremswirkung zum Bremsen (d. h. zum Verzögern) des Fahrzeuges bereitgestellt wird, und vorzugsweise die Fahrzeugverzögerung durch das Bremsen durch ein Fahrzeugassistenz-System bestimmt ist, bevorzugt vorrangig durch die Nutzung des elektrischen Antriebs im generatorischen Betrieb, und im zweiten Bremszustand die Bremsfunktion deaktiviert ist,
- Verringern der (insbesondere durch das Fahrzeugassistenz-System gestellten) Bremswirkung der Bremsfunktion bei der und/oder zumindest einer weiteren Betätigung des Bremspedals, um den Übergang (insbesondere hin zum zweiten Bremszustand) durchzuführen, wobei ein Ausmaß der Verringerung von der Bewegung des Bremspedals und/oder von einem Pedalweg des Bremspedals (und damit ebenfalls von der Bewegung des Bremspedals) abhängig ist, und insbesondere durch den Pedalweg definiert wird. Dieser letzte Schritt kann vorteilhafterweise wiederholt durchgeführt werden, und/oder es kann die Verringerung bei jeder weiteren Betätigung des Bremspedals durchgeführt werden, bis die Bremswirkung der Bremsfunktion aufgehoben ist (bei Null bzw. deaktiviert ist) und somit der zweite Bremszustand erreicht und/oder der Übergang abgeschlossen ist.

Dies hat den Vorteil, dass das Verringern bei Betätigung des Bremspedals erfolgt, d. h. durch Mitwirkung des Fahrers, und (insbesondere außerhalb einer Ausgangsstellung des Bremspedals) nicht selbstständig, z. B. zeitgesteuert, ohne Mitwirkung des Fahrers. Der Fahrer wird daher nicht durch die Verringerung (d. h. Abbau der Bremswirkung) irritiert. Insbesondere ist dabei ein wiederholtes Verringern der Bremswirkung dieser Bremsfunktion jeweils bei den weiteren Betätigungen des Bremspedals vorgesehen. Das Ausmaß kann z. B. dadurch abhängig sein von dem Pedalweg, dass ein vorgegebenes Verhältnis zwischen Ausmaß und Pedalweg vorgegeben ist. Dieses Verhältnis kann z. B. auch von der Bewegungsrichtung des Bremspedals abhängig sein, sodass unterschiedliche Verhältnisse für den Vor- und Rückhub vorgesehen sind. Der Pedalweg kann z. B. abhängig sein von einem Ausmaß und/oder eine Dauer der Betätigung des Bremspedals und/oder der Bewegung des Bremspedals. Die Betätigung erfolgt bspw. ausschließlich manuell, also durch einen Fahrer des Fahrzeuges.

Unter einem Pedalweg wird im Rahmen dieser Erfindung insbesondere der Weg verstanden, welchen das Bremspedal bei Betätigung durch die Bewegung des Bremspedals zurücklegt. In anderen Worten erfolgt immer dann eine Veränderung des Pedalwegs, wenn das Bremspedal bewegt wird.

Vorzugsweise kann bei einer Modulation des Bremspedals die Verringerung mehrfach durchgeführt werden, bis die Bremswirkung der (ersten) Bremsfunktion aufgehoben ist und somit der zweite Bremszustand erreicht und/oder der Übergang abgeschlossen ist. Erfolgt nach getretenem Bremspedal ein gänzliches Lösen, kann die Bremswirkung der ersten Bremsfunktion auch gänzlich zeitgesteuert aufgehoben werden.

Der erste Bremszustand kann einen Bremsvorgang bezeichnen, bei welchem das Bremsen des Fahrzeuges automatisiert durch das Fahrzeug selbst, insbesondere ein Fahrzeugassistenz-System, durchgeführt wird. Dagegen kann der zweite Bremszustand einen Bremsvorgang bezeichnen, bei welchem das Bremsen manuell durchgeführt wird. Die (erste) Bremsfunktion des Antriebs ist bspw. eine solche Bremsfunktion, welche automatisch durch das Fahrzeugassistenz-System verwendet wird und/oder eine ausschließlich automatische Regelung der Bremsung durch das Fahrzeug umfasst.

Das Fahrzeug kann ein Fahrzeugassistenz-System aufweisen, welches bspw. als ein ACC (engl. Adaptive Cruise Control), also einer Abstandsregelung, ausgeführt ist. Um eine Verzögerung des Fahrzeuges durch das Fahrzeugassistenz-System einzuleiten, können verschiedene Bremsfunktionen genutzt werden. Die erste Bremsfunktion ist bspw. eine Generatorbremse (auch: Rekuperationsbremse oder Nutzbremse), welche durch den Antrieb bereitgestellt werden kann. Hierzu kann der Antrieb in den Generatorbetrieb versetzt werden. Wenn die erste Bremsfunktion eine Rekuperationsbremse umfasst, kann beim Bremsen des Fahrzeuges Bewegungsenergie als elektrische Energie zurückgewonnen werden, welche insbesondere zur Aufladung eines Energiespeichers des Fahrzeuges genutzt wird. Die zweite Bremsfunktion kann eine Bremse des Fahrzeuges sein, welche den elektrischen Antrieb nicht zur Bremsung des Fahrzeuges nutzt. Dies ist bspw. eine hydraulische Bremsung, ggf. mit Bremskraftverstärker. Die zweite Bremsfunktion kann dann z. B. durch eine Bremshydraulik des Fahrzeuges bereitgestellt werden. Die zweite Bremsfunktion kann eine manuell durch das Bremspedal betätigbare Bremsfunktion sein.

Das Ausmaß der Verzögerung des Fahrzeuges durch die entsprechende Bremsfunktion kann auch als Bremswirkung der entsprechenden Bremsfunktion bezeichnet werden. Es ist insbesondere vorgesehen, dass bei einer automatischen Veränderung (Erhöhung oder Verringerung) der (zweiten) Bremswirkung der zweiten Bremsfunktion auch eine Stellung des Bremspedals verändert wird. Auf diese Weise kann die Stellung des Bremspedals fest mit der Bremswirkung der zweiten Bremsfunktion gekoppelt sein. In anderen Worten kann die Abhängigkeit zwischen der Stellung des Bremspedals (und/oder Bremspedalweg) und Bremswirkung der zweiten Bremsfunktion fest vorgegeben sein. Eine automatische Erhöhung dieser Bremswirkung, welche nicht durch die Betätigung des Bremspedals ausgelöst wurde (also z. B. stattdessen durch das Fahrzeugassistenz-System), kann somit eine automatische Bewegung des Bremspedals mit sich bringen. Um allerdings eine solche Bewegung und damit eine Irritation des Fahrers während der Betätigung des Bremspedals zu vermeiden, kann im zweiten Bremszustand und/oder während des Übergangs eine automatische Veränderung dieser zweiten Bremswirkung (d. h. nicht von der Betätigung des Bremspedals durch den Fahrer gesteuerte Veränderung) deaktiviert sein. Bei einer automatischen Veränderung (Erhöhung oder Verringerung) der Bremswirkung der ersten Bremsfunktion kann hingegen die Stellung des Bremspedals unverändert bleiben, also nicht automatisch verändert werden.

Wenn nun im ersten Bremszustand die (erste) Bremsfunktion des Antriebs verwendet wird, und z. B. ein bestimmtes Ausmaß der (ersten) Bremswirkung dieser Bremsfunktion bereitstellt, und dann in diesem Zustand das Bremspedal betätigt wird, kann die Deaktivierung des ersten Bremszustands initiiert werden. Dies erfolgt vorteilhafterweise nur dann, wenn die Betätigung des Bremspedals als hinreichend erkannt wird. Bei der Initiierung kann ggf. zunächst die automatisch durch das Fahrzeugassistenz-System durchgeführte Steuerung und/oder Regelung der Bremsung (also die automatische Veränderung der Bremswirkung der ersten und/oder zweiten Bremsfunktion) deaktiviert werden. Die automatische Veränderung der Bremswirkung der ersten Bremsfunktion kann dann ggf. zunächst durch ein Bremssystem übernommen werden, um nach Beendigung des Übergangs diese automatische Veränderung für den zweiten Bremszustand zu deaktivieren. Während des Übergangs kann sich der Abbau der Bremswirkung der ersten Bremsfunktion (also z. B. des Generatormoments) an einen Verlauf der Bremspedalbetätigung orientieren. So kann im Vorhub des Bremspedals die erste Bremsfunktion (also die Bremswirkung) nur im geringen Maße verringert werden, um weiterhin eine ausreichende Verzögerung des Fahrzeuges zu gewährleisten. Im Rückhub kann hingegen die Bremswirkung im stärkeren Maße verringert werden, da der Verzögerungsabbau hierbei eher durch den Fahrer akzeptiert werden kann. Wenn dann im Rückhub eine Bremspedalstellung von 0 % erreicht wird (also eine Ausgangsstellung), und somit das Bremspedal unbetätigt ist, kann die erste Bremswirkung automatisch bis zur Deaktivierung weiter verringert werden. Diese weitere Verringerung erfolgt z. B. über eine Zeitdauer automatisch auf 0 Nm. Mit der Deaktivierung der ersten Bremswirkung, und damit der ersten Bremsfunktion, ist auch der erste Bremszustand deaktiviert, und der Übergang abgeschlossen. In der Ausgangsstellung kann die zweite Bremsfunktion ggf. keinerlei Bremswirkung ausüben.

Unter einer Abhängigkeit des Ausmaßes bzw. der Verringerung von dem Pedalweg kann im engeren Sinne auch eine Abhängigkeit von einem Gradienten des Pedalwegs verstanden werden.

Es kann vorteilhafterweise durch ein erfindungsgemäßes Verfahren bei Vorliegen der ersten Bremswirkung, insbesondere in der Form einer aktiven generatorischen Verzögerung, die erste Bremsfunktion (insbesondere das Generatormoment) bei der Betätigung des Bremspedals abgebaut werden. Dabei muss die zweite Bremswirkung sich ggf. an der Grundauslegung des Bremssystems orientieren. Für den Fahrer kann sich im zweiten Bremszustand eine feste Zuordnung des Bremspedalwegs zum wirkenden Verzögerungsmoment ergeben. Dieses kann auf einer fest vorgegebenen Bremsenkennlinie beruhen. Es ist vorzugsweise ein Abbau der ersten Bremsfunktion in Abhängigkeit vom Bremspedalweg möglich. Somit kann konkret das Moment abhängig von der Betätigung des Bremspedals herausgerampt werden, vorzugsweise im Rückhub des Bremspedals, und ggf. auch im Vorhub.

Im Rahmen der Erfindung kann ein Rückhub eine Rückwärtsbewegung, und ein Vorhub eine Vorwärtsbewegung entsprechend in gegengesetzte Bewegungsrichtungen des Bremspedals bezeichnen.

Es kann möglich sein, dass sich im zweiten Bremszustand entsprechend dem Bremspedalweg ein Verzögerungsmoment ergibt, welches auf einer fest vorgegebenen Bremsenkennlinie beruht. Es kann sich hierbei um eine rein hydraulische Bremsung oder eine Mischform (also nicht rein hydraulisch) handeln. In einem rein hydraulischen Bremssystem kann die Bremsenkennlinie durch die sogenannte p/V Kennlinie gekennzeichnet sein.

Bei Anwendung einer elektrischen Maschine als der Antrieb, d. h. als zusätzliches Verzögerungselement im generatorischen Betrieb, kann im zweiten Bremszustand entsprechend der Kennline ein Mischbetrieb aus hydraulischen und generatorischen Moment vorhanden sein. Es kann ein hydraulisches Volumen dann verblendet und entsprechend dem eingestellten Generatormoment dann der Druck abgebaut werden ("Bremsen-Blenden").

Vorteilhaft ist es zudem, wenn das Fahrzeug als ein Kraftfahrzeug, insbesondere gleisloses Landkraftfahrzeug, z. B. als ein Hybridfahrzeug, das eine Brennkraftmaschine und eine Elektromaschine zur Traktion umfasst oder als ein Elektrofahrzeug ausgebildet ist, vorzugsweise mit einem Hochvolt-Bordnetz und/oder einem Elektromotor. Insbesondere kann das Fahrzeug als ein und/oder Personenkraftfahrzeug ausgebildet sein. Bevorzugt ist bei Ausführungsformen von Elektrofahrzeugen kein Verbrennungsmotor beim Fahrzeug vorgesehen, es wird dann ausschließlich durch elektrische Energie angetrieben.

Nach einer weiteren Möglichkeit kann vorgesehen sein, dass im ersten Bremszustand ein Fahrzeugassistenz-System aktiviert ist, vorzugsweise eine Abstandsregelung, welches die (erste) Bremsfunktion des Antriebs zur automatischen Abbremsung des Fahrzeuges verwendet, wobei bevorzugt das Fahrzeugassistenz-System durch das Initiieren des Übergangs deaktiviert wird. Insbesondere kann das initiale Betätigen des Bremspedals genutzt werden, um die Steuerung der Bremsung des Fahrzeuges wieder an den Fahrer zu übergeben. Hierzu dient dann entsprechend der Übergang vom ersten in den zweiten Bremszustand. Im ersten Bremszustand kann das Fahrzeugassistenz-System z. B. den Abstand des Fahrzeuges zu einem vorausfahrenden Fahrzeug durch die Einstellung der ersten und/oder zweiten Bremsfunktion regeln. Somit erfolgt hierbei ein automatisches Abbremsen und/oder Beschleunigen durch das Fahrzeugassistenz-System, um den Fahrkomfort und die Sicherheit zu erhöhen.

Ferner kann im Rahmen der Erfindung vorgesehen sein, dass das Ausmaß der Verringerung zusätzlich abhängig ist von einer Betätigungsrichtung des Bremspedals, und insbesondere in Relation zum Pedalweg durch die Betätigungsrichtung definiert wird. Ferner ist es denkbar, dass die Betätigungsrichtung einen Vorhub und, in entgegengesetzter Richtung, einen Rückhub umfasst, wobei das Ausmaß (der Verringerung) bei dem Vorhub geringer ist als bei dem Rückhub. Somit kann bspw. das Ausmaß bei einem Vorhub des Bremspedals kleiner sein als bei einem Rückhub, um beim Vorhub eine höhere gesamte Bremswirkung (also der Summe der ersten und zweiten Bremswirkung) zu erzielen. Ein verstärkter Abbau der Bremswirkung kann daher vermieden werden.

Des Weiteren kann vorgesehen sein, dass die Bremsfunktion des Antriebs als eine Generatorbremse ausgeführt ist, vorzugsweise um die Bremswirkung in der Form eines generatorischen Verzögerungsmoments bereitzustellen. Dies ermöglicht vorteilhafterweise eine Rekuperation und somit eine Aufladung eines Energiespeichers des Fahrzeuges zum Betreiben des Antriebs.

Weiter ist im Rahmen der Erfindung denkbar, dass die Verringerung (der Bremswirkung der Bremsfunktion des Antriebs) für die Durchführung des Übergangs ausschließlich dann initiiert wird, wenn das Bremspedal bewegt wird, und vorzugsweise während eines Stillstands des Bremspedals (außerhalb einer Ausgangsstellung des Bremspedals) die Bremsfunktion des Antriebs die Bremswirkung konstant bereitstellt, vorzugsweise in der Form eines konstanten generatorischen Verzögerungsmoments zum Bremsen des Fahrzeuges. Dies betrifft dabei insbesondere einen Stillstand außerhalb der Ausgangsstellung des Bremspedals. Dagegen kann in der Ausgangsstellung auch bei dem Stillstand die (erste) Bremswirkung automatisch und/oder stetig und/oder zeitgesteuert abgebaut werden.

Gemäß einer vorteilhaften Weiterbildung der Erfindung kann vorgesehen sein, dass zusätzlich zur Bremsfunktion des Antriebs in der Form einer ersten Bremsfunktion eine zweite Bremsfunktion vorgesehen ist, wobei vorzugsweise die zweite Bremsfunktion im ersten und zweiten Bremszustand verwendet wird, um das Bremsen des Fahrzeuges bereitzustellen, wobei sich die erste Bremsfunktion von der zweiten Bremsfunktion unterscheiden kann. Somit ist neben der automatischen Bremsung durch die erste Bremsfunktion auch eine manuelle Bremsung des Fahrzeuges möglich.

Weiter ist im Rahmen der Erfindung denkbar, dass die zweite Bremsfunktion mit einem Verzögerungsmoment entsprechend der Auslegung der hydraulischen Bremse ausgeführt ist, welches vorzugsweise im zweiten Bremszustand ausschließlich und/oder im ersten Bremszustand zusätzlich zur ersten Bremsfunktion ein Abbremsen des Fahrzeuges durchführt. Somit kann dann, wenn die erste Bremsfunktion verfügbar ist, diese zusätzlich die zweite Bremsfunktion im ersten Bremszustand unterstützen.

Es ist ferner denkbar, dass im zweiten Bremszustand und während des Übergangs eine Bremswirkung der zweiten Bremsfunktion, insbesondere das Verzögerungsmoment, fest in Abhängigkeit von einer Stellung des Bremspedals durch die Bremssystemauslegung vorgegeben ist. Somit kann sicher und zuverlässig die Verzögerung des Fahrzeuges manuell gesteuert werden.

Ebenfalls Gegenstand der Erfindung ist eine Vorrichtung für ein Fahrzeug mit einem elektrischen Antrieb. Hierbei ist vorgesehen, dass die Vorrichtung eine Recheneinheit und eine Speichereinheit umfasst und in der Speichereinheit ein (insbesondere Computer-) Programm abgelegt ist, welches bei zumindest teilweiser Ausführung durch die Recheneinheit dazu ausgebildet ist, ein erfindungsgemäßes Verfahren auszuführen. Damit bringt die erfindungsgemäße Vorrichtung die gleichen Vorteile mit sich, wie sie ausführlich mit Bezug auf ein erfindungsgemäßes Verfahren beschrieben worden sind. Die Vorrichtung kann ferner bspw. einen Momentenkoordinator aufweisen, welcher eine Verzögerung des Fahrzeuges für das Fahrzeugassistenz-System einstellt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung zur Visualisierung eines erfindungsgemäßen Verfahrens,
- Figur 2: eine schematische Darstellung eines Fahrzeuges mit einer erfindungsgemäßen Vorrichtung,
- Figur 3: eine weitere schematische Darstellung zur Visualisierung eines erfindungsgemäßen Verfahrens im funktionalen Ablauf.

In den nachfolgenden Figuren werden für die gleichen technischen Merkmale auch von unterschiedlichen Ausführungsbeispielen die identischen Bezugszeichen verwendet.

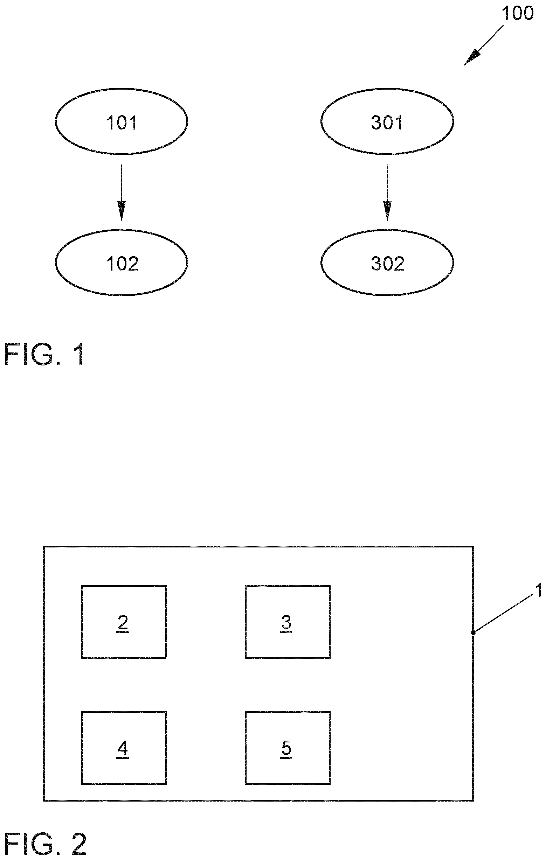

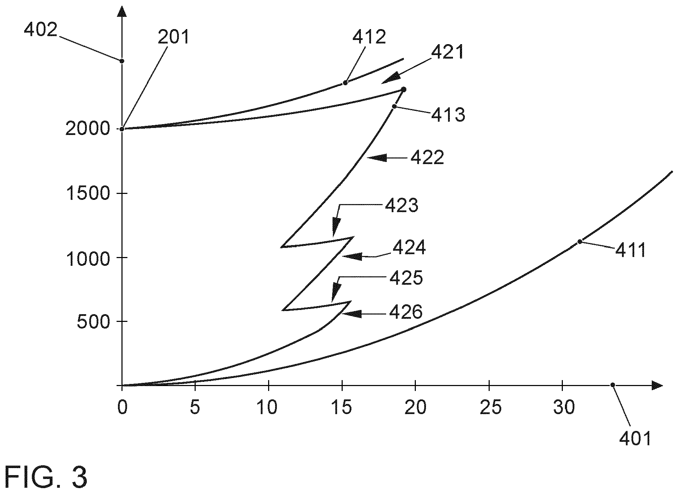

In Figur 1 und 3 ist ein erfindungsgemäßes Verfahren 100 visualisiert, welches zum Übergang von einem ersten Bremszustand 201 zu einem zweiten Bremszustand 202 bei einem Fahrzeug 1 mit einem elektrischen Antrieb 2 dient. Gemäß einem ersten Verfahrensschritt 101 erfolgt dabei ein Initiieren des Übergangs bei einer Betätigung eines Bremspedals 3 des Fahrzeuges 1, wobei im ersten Bremszustand 201 durch eine Bremsfunktion 301 des elektrischen Antriebs 2 eine Bremswirkung zum Bremsen des Fahrzeuges 1 bereitgestellt wird, und im zweiten Bremszustand 202 die Bremsfunktion 301 deaktiviert ist. Gemäß einem zweiten Verfahrensschritt 102 erfolgt ein Verringern der Bremswirkung der Bremsfunktion 301 bei der und/oder zumindest einer weiteren Betätigung des Bremspedals 3, um den Übergang durchzuführen, wobei ein Ausmaß der Verringerung von einem Pedalweg 401 des Bremspedals 3 abhängig ist. Die Bremsfunktion 301 des Antriebs 2 kann dabei als eine Generatorbremse 301 ausgeführt sein, vorzugsweise um die Bremswirkung in der Form eines generatorischen Verzögerungsmoments bereitzustellen. Die Verringerung der Bremswirkung der Bremsfunktion des Antriebs für die Durchführung des Übergangs kann ferner ausschließlich dann initiiert werden, wenn das Bremspedal 3 bewegt wird, und vorzugsweise während eines Stillstands des Bremspedals 3 die Bremsfunktion 301 des Antriebs 2 die Bremswirkung konstant bereitstellen, vorzugsweise in der Form eines konstanten generatorischen Verzögerungsmoments 402 zum Bremsen des Fahrzeuges 1. Zusätzlich zur Bremsfunktion 301 des Antriebs 2 in der Form einer ersten Bremsfunktion 301 kann eine zweite Bremsfunktion 302 vorgesehen sein, wobei die zweite Bremsfunktion 302 im ersten und zweiten Bremszustand 201, 202 verwendet wird, um das Bremsen des Fahrzeuges 1 bereitzustellen, wobei sich die erste Bremsfunktion von der zweiten Bremsfunktion unterscheidet. Die zweite Bremsfunktion 302 kann hierbei mit einem Verzögerungsmoment entsprechend der Auslegung der hydraulischen Bremse 302 ausgeführt sein.

In Figur 2 ist schematisch ein Fahrzeug 1 dargestellt, welches einen elektrischen Antrieb 2, insbesondere einen Elektromotor 2, ein Bremspedal 3, ein Fahrzeugassistenz-System 4 und eine erfindungsgemäße Vorrichtung 5 aufweist.

In Figur 3 ist ein Diagramm gezeigt, welches einen möglichen Übergang gemäß einem erfindungsgemäßen Verfahren 100 visualisiert. Dabei ist gemäß einer ersten Achse ein Pedalweg 401 (insbesondere Bremspedalweg in Prozent) und gemäß einer zweiten Achse ein Verzögerungsmoment 402, insbesondere in der Einheit Nm, dargestellt. Die dabei dargestellten Werte sind als rein beispielhaft aufzufassen. Ausgangspunkt ist der erste Bremszustand 201, bei welchem das Fahrzeugassistenz-System 4 aktiviert ist und die automatische Abbremsung des Fahrzeuges durch die erste und zweite Bremsfunktion 301, 302 kontrolliert. Hierbei kann auch ein Verzögerungsmoment 402 vorliegen, welches nur durch die erste Bremswirkung der ersten Bremsfunktion 301 bewirkt wird.

Zum besseren Verständnis ist eine erste Bremsbetätigung 411 gezeigt, bei welcher nur die zweite Bremswirkung der zweiten Bremsfunktion 302 genutzt wird. Eine zum Vergleich gezeigte manuelle zweite Bremsbetätigung 412 des Bremspedals 3 hätte daher ausgehend vom Punkt 201 einen Verlauf wie bei der ersten Bremsbetätigung 411 zur Folge.

Es kann nun vorgesehen sein, dass gemäß einer dritten Bremsbetätigung 413 bereits bei diesem Vorhub des Bremspedals 3 eine erste Verringerung 421 der ersten Bremswirkung des Antriebs 301, insbesondere eine Absenkung des Generatormoments, erfolgt.

Vorrangig kann jedoch beim Rückhub des Bremspedals 3 eine weitere Verringerung 422 mit größerem Ausmaße erfolgen. Bei Modulierung des Bremspedals 3 erfolgen weitere Verringerungen 423, 424, 425 und 426, bis die erste Bremswirkung vollständig aufgehoben ist. Damit ist der zweite Bremszustand 202 erreicht.

### Bezugszeichenliste

1 Fahrzeug
2 Antrieb, Elektromotor
3 Bremspedal
4 Fahrzeugassistenz-System
5 Vorrichtung

100 Verfahren
101 erster Verfahrensschritt
102 zweiter Verfahrensschritt

201 erster Bremszustand
202 zweiter Bremszustand

301 Bremsfunktion, des Antriebs, erste Bremsfunktion, Generatorbremse, elektromotorischen Bremse
302 zweite Bremsfunktion

401 Pedalweg, Bremspedalweg in Prozent
402 Verzögerungsmoment, in Nm
411 erste Bremsbetätigung
412 zweite Bremsbetätigung
413 dritte Bremsbetätigung

421 erste Absenkung des Generatormoments
422 zweite Absenkung des Generatormoments
423 dritte Absenkung des Generatormoments
424 vierte Absenkung des Generatormoments
425 fünfte Absenkung des Generatormoments
426 sechste Absenkung des Generatormoments

## Patentansprüche

1. Verfahren (100) zum Übergang von einem ersten Bremszustand (201) zu einem zweiten Bremszustand (202) bei einem Fahrzeug (1) mit einem elektrischen Antrieb (2),
wobei die nachfolgenden Schritte durchgeführt werden:
- Initiieren des Übergangs bei einer Betätigung eines Bremspedals (3) des Fahrzeuges (1), wobei im ersten Bremszustand (201) durch eine Bremsfunktion (301) des elektrischen Antriebs (2) eine Bremswirkung zum Bremsen des Fahrzeuges (1) bereitgestellt wird, und im zweiten Bremszustand (202) die Bremsfunktion (301) deaktiviert ist,
- Verringern der Bremswirkung der Bremsfunktion (301) bei der und/oder zumindest einer weiteren Betätigung des Bremspedals (3), um den Übergang durchzuführen, wobei ein Ausmaß der Verringerung von einem Pedalweg (401) des Bremspedals (3) abhängig ist.

2. Verfahren (100) nach Anspruch 1,
**dadurch gekennzeichnet,**
**dass** im ersten Bremszustand (201) ein Fahrzeugassistenz-System (4) aktiviert ist, vorzugsweise eine Abstandsregelung, welches die Bremsfunktion (301) des Antriebs (2) zur automatischen Abbremsung des Fahrzeuges (1) verwendet, wobei das Fahrzeugassistenz-System (4) durch das Initiieren des Übergangs deaktiviert wird.

3. Verfahren (100) nach Anspruch 1 oder 2,
**dadurch gekennzeichnet,**
**dass** das Ausmaß der Verringerung zusätzlich abhängig ist von einer Betätigungsrichtung des Bremspedals (3), und insbesondere in Relation zum Pedalweg (401) durch die Betätigungsrichtung definiert wird.

4. Verfahren (100) nach Anspruch 3,
**dadurch gekennzeichnet,**
**dass** die Betätigungsrichtung einen Vorhub und, in entgegengesetzter Richtung, einen Rückhub umfasst, wobei das Ausmaß bei dem Vorhub geringer ist als bei dem Rückhub.

5. Verfahren (100) nach einem der vorhergehenden Ansprüche,
**dadurch gekennzeichnet,**
**dass** die Bremsfunktion (301) des Antriebs (2) als eine Generatorbremse (301) ausgeführt ist, vorzugsweise um die Bremswirkung in der Form eines generatorischen Verzögerungsmoments bereitzustellen.

6. Verfahren (100) nach einem der vorhergehenden Ansprüche,
**dadurch gekennzeichnet,**
**dass** die Verringerung für die Durchführung des Übergangs ausschließlich dann initiiert wird, wenn das Bremspedal (3) bewegt wird, und vorzugsweise während eines Stillstands des Bremspedals (3) die Bremsfunktion (301) des Antriebs (2) die Bremswirkung konstant bereitstellt, vorzugsweise in der Form eines konstanten generatorischen Verzögerungsmoments (402) zum Bremsen des Fahrzeuges (1).

7. Verfahren (100) nach einem der vorhergehenden Ansprüche,
**dadurch gekennzeichnet,**
**dass** zusätzlich zur Bremsfunktion (301) des Antriebs (2) in der Form einer ersten Bremsfunktion (301) eine zweite Bremsfunktion (302) vorgesehen ist, wobei die zweite Bremsfunktion (302) im ersten und zweiten Bremszustand (201, 202) verwendet wird, um das Bremsen des Fahrzeuges (1) bereitzustellen, wobei sich die erste Bremsfunktion von der zweiten Bremsfunktion unterscheidet.

8. Verfahren (100) nach Anspruch 7,
**dadurch gekennzeichnet,**
**dass** die zweite Bremsfunktion (302) mit einem Verzögerungsmoment entsprechend der Auslegung der hydraulischen Bremse (302) ausgeführt ist, welches im zweiten Bremszustand (202) ausschließlich und/oder im ersten Bremszustand (201) zusätzlich zur ersten Bremsfunktion (301) ein Abbremsen des Fahrzeuges durchführt.

9. Verfahren (100) nach Anspruch 7 oder 8,
**dadurch gekennzeichnet,**
**dass** im zweiten Bremszustand (202) und während des Übergangs eine Bremswirkung der zweiten Bremsfunktion (302), insbesondere das Verzögerungsmoment, fest in Abhängigkeit von einer Stellung des Bremspedals (3) vorgegeben ist.

10. Vorrichtung (5) für ein Fahrzeug (1) mit einem elektrischen Antrieb (2),
**dadurch gekennzeichnet,**
**dass** die Vorrichtung (5) eine Recheneinheit und eine Speichereinheit umfasst und in der Speichereinheit ein Programm abgelegt ist, welches bei zumindest teilweiser Ausführung durch die Recheneinheit dazu ausgebildet ist, ein Verfahren (100) nach einem der vorhergehenden Ansprüche auszuführen.

## Claims

1. Method (100) for transition from a first braking state (201) to a second braking state (202) in a vehicle (1) with an electric drive (2),
wherein the following steps are carried out:
- initiating the transition upon an actuation of a brake pedal (3) of the vehicle (1), wherein, in the first braking state (201), a braking action for braking the vehicle (1) is provided by a braking function (301) of the electric drive (2), and, in the second braking state (202), the braking function (301) is deactivated,
- reducing the braking action of the braking function (301) during the and/or at least one further actuation of the brake pedal (3), in order to carry out the transition, wherein an extent of the reduction is dependent on a pedal travel (401) of the brake pedal (3).

2. Method (100) according to Claim 1,
**characterized**
**in that**, in the first braking state (201), a vehicle assistance system (4) is activated, preferably a distance control, which uses the braking function (301) of the drive (2) to automatically brake the vehicle (1), wherein the vehicle assistance system (4) is deactivated by the initiation of the transition.

3. Method (100) according to Claim 1 or 2,
**characterized**
**in that** the extent of the reduction is additionally dependent on an actuation direction of the brake pedal (3), and, in particular in relation to the pedal travel (401), is defined by the actuation direction.

4. Method (100) according to Claim 3,
**characterized**
**in that** the actuation direction comprises a forward stroke and, in the opposite direction, a return stroke, wherein the extent during the forward stroke is smaller than during the return stroke.

5. Method (100) according to one of the preceding claims,
**characterized**
**in that** the braking function (301) of the drive (2) is designed as a generator brake (301), preferably in order to provide the braking action in the form of a generator deceleration torque.

6. Method (100) according to one of the preceding claims,
**characterized**
**in that** the reduction for carrying out the transition is initiated exclusively when the brake pedal (3) is moved, and, preferably if the brake pedal (3) is at a standstill, the braking function (301) of the drive (2) provides the braking action constantly, preferably in the form of a constant generator deceleration torque (402) for braking the vehicle (1) .

7. Method (100) according to one of the preceding claims,
**characterized**
**in that**, in addition to the braking function (301) of the drive (2) in the form of a first braking function (301), a second braking function (302) is provided, wherein the second braking function (302) is used in the first and second braking state (201, 202) in order to provide the braking of the vehicle (1), wherein the first braking function differs from the second braking function.

8. Method (100) according to Claim 7,
**characterized**
**in that** the second braking function (302) is implemented with a deceleration torque in accordance with the configuration of the hydraulic brake (302), said deceleration torque carrying out braking of the vehicle exclusively, in the second braking state (202), and/or in addition to the first braking function (301), in the first braking state (201).

9. Method (100) according to Claim 7 or 8
**characterized**
**in that**, in the second braking state (202) and during the transition, a braking action of the second braking function (302), in particular the deceleration torque, is fixedly defined depending on a position of the brake pedal (3).

10. Device (5) for a vehicle (1) with an electric drive (2) ,
**characterized**
**in that** the device (5) comprises a computing unit and a memory unit, and the memory unit stores a program which, when it is at least partially executed by the computing unit, is designed to carry out a method (100) according to one of the preceding claims.

## Revendications

1. Procédé (100) de transfert d'un premier état de freinage (201) à un deuxième état de freinage (202) dans un véhicule (1) comprenant un entraînement électrique (2),
Ledit procédé comprenant les étapes suivantes :
- lancer le transfert lorsqu'une pédale de frein (3) du véhicule (1) est actionnée, un effet de freinage destiné à freiner le véhicule (1) étant assuré dans le premier état de freinage (201) par une fonction de freinage (301) de l'entraînement électrique (2), et la fonction de freinage (301) étant désactivée dans le deuxième état de freinage (202),
- réduire l'effet de freinage de la fonction de freinage (301) pendant l'actionnement et/ou au moins un autre actionnement de la pédale de frein (3) afin d'effectuer le transfert, l'étendue de la réduction dépendant d'une course (401) de la pédale de frein (3).

2. Procédé (100) selon la revendication 1,
**caractérisé en ce que**
dans le premier état de freinage (201), un système d'assistance de véhicule (4) est activé, de préférence une régulation de distance qui utilise la fonction de freinage (301) de l'entraînement (2) pour freiner automatiquement le véhicule (1), le système d'assistance de véhicule (4) étant désactivé par le lancement du transfert.

3. Procédé (100) selon la revendication 1 ou 2,
**caractérisé en ce que**
l'étendue de la réduction dépend en outre d'un sens d'actionnement de la pédale de frein (3) et est définie par le sens d'actionnement en particulier par rapport à la course de pédale (401).

4. Procédé (100) selon la revendication 3,
**caractérisé en ce que**
le sens d'actionnement comprend une course avant et, dans le sens opposé, une course retour, l'étendue de course avant étant inférieure à celle de la course retour.

5. Procédé (100) selon l'une des revendications précédentes,
**caractérisé en ce que**
la fonction de freinage (301) de l'entraînement (2) est réalisée sous la forme d'un frein de générateur (301), de préférence pour fournir l'effet de freinage sous la forme d'un couple de décélération régénératif.

6. Procédé (100) selon l'une des revendications précédentes,
**caractérisé en ce que**
la réduction pour la mise en œuvre du transfert n'est lancée que lorsque la pédale de frein (3) est déplacée, et de préférence pendant un arrêt de la pédale de frein (3) la fonction de freinage (301) de l'entraînement (2) fournit l'effet de freinage en permanence, de préférence sous la forme d'un couple de décélération générateur constant (402) pour freiner le véhicule (1).

7. Procédé (100) selon l'une des revendications précédentes,
**caractérisé en ce que**
une deuxième fonction de freinage (302) est prévue en plus de la fonction de freinage (301) de l'entraînement (2) sous la forme d'une première fonction de freinage (301), la deuxième fonction de freinage (302) étant utilisée dans les premier et deuxième états de freinage (201, 202) pour assurer le freinage du véhicule (1), la première fonction de freinage étant différente de la deuxième fonction de freinage.

8. Procédé (100) selon la revendication 7,
**caractérisé en ce que**
la deuxième fonction de freinage (302) est réalisée avec un couple de décélération correspondant à la conception du frein hydraulique (302) qui réalise le freinage du véhicule dans le deuxième état de freinage (202) exclusivement et/ou dans le premier état de freinage (201) en plus de la première fonction de freinage (301).

9. Procédé (100) selon la revendication 7 ou 8,
**caractérisé en ce que**
dans le deuxième état de freinage (202) et pendant le transfert, un effet de freinage de la deuxième fonction de freinage (302), en particulier le couple de décélération, est spécifié de manière fixe en fonction d'une position de la pédale de frein (3).

10. Dispositif (5) destiné à un véhicule (1) à entraînement électrique (2),
**caractérisé en ce que**
le dispositif (5) comprend une unité de calcul et une unité de mémorisation et un programme est mémorisé dans l'unité de mémorisation, lequel, lorsqu'il est exécuté au moins partiellement par l'unité de calcul, est conçu pour mettre en œuvre un procédé (100) selon l'une des revendications précédentes.
